# EUROPÄISCHE PATENTSCHRIFT

(11) **EP 0 433 783 B1**
(45) Veröffentlichungstag und Bekanntmachung des Hinweises auf die Patenterteilung: **16.03.1994**
(21) Anmeldenummer: 90123408.8
(22) Anmeldetag: 06.12.1990
(51) Int. Cl.: C09D 5/44

(54) **Wässriges Überzugsmittel für die Elektrotauchlackierung und seine Verwendung bei der Herstellung von Mehrschichtlackierungen**
Aqueous coating composition for electrodepostion and its use in making multilayer paint systems
Composition aqueuse de revêtement pour électrodéposition et son utilisation pour l'obtention de revêtements à couches multiples

(30) Priorität: 09.12.1989 DE 3940782
(43) Veröffentlichungstag der Anmeldung: 26.06.1991
(73) Patentinhaber: Herberts Gesellschaft mit beschränkter Haftung, 42285 Wuppertal (DE)
(72) Erfinder: Budde, Bettina, W-4630 Bochum (DE); Grütter, Roland, Dr., W-5600 Wuppertal 1 (DE); Klein, Klausjörg, W-5600 Wuppertal 2 (DE)
(74) Vertreter: Türk, Gille, Hrabal, Leifert

(56) Entgegenhaltungen:
- EP-A- 0 259 181
- DE-A- 3 116 404
- GB-A- 1 157 974
- GB-A- 1 164 154

## Beschreibung

Die Erfindung betrifft ein wäßriges Überzugsmittel zur Elektrotauchlackierung, enthaltend ein Bindemittel aus einem oder mehreren wasserlöslichen oder wasserdispergierbaren filmbildenden Harzen, und gegebenenfalls einem oder mehreren üblichen Vernetzern für die filmbildenden Harze; sowie dispergierte Polymerteilchen und gegebenenfalls Pigmente, Lösemittel und/oder übliche lacktechnische Additive.

Die Elektrotauchlackierung ist ein bekanntes Verfahren zur Beschichtung der Oberfläche von elektrisch leitenden Objekten, die z.B. aus Metall oder leitenden oder leitend gemachten Kunststoffen bestehen können. Dabei wird der zu beschichtende Gegenstand in ein wäßriges Beschichtungsbad getaucht, und im Falle der kathodischen Abscheidung als Kathode an eine Gleichstromquelle angeschlossen, wobei durch den fließenden Strom das Überzugsmittel auf der Werksstoffoberfläche abgeschieden wird. Das festhaftende Material wird dann durch Lufttrocknung oder Erhitzen physikalisch zum Verfließen gebracht und gegebenenfalls chemisch vernetzt, um eine homogene glatte steinschlagresistene Oberfläche zu erzeugen.

Die eingesetzten Elektrotauchlackierungs-Überzugsmittel bestehen im wesentlichen aus einem oder mehreren neutralisierbaren und danach wasserdispergierbaren elektrisch abscheidbaren Harzen, gegebenenfalls weiteren nicht allein wasserdispergierbaren Bindemitteln (Weichmachern) oder Vernetzern, speziellen Anreibeharzen,- Pigmenten und Füllstoffen, sowie gegebenenfalls benötigten Additiven und Hilfsstoffen. Über ein Variieren der Zusammensetzung der Harzbestandteile ist eine Beeinflussung der Filmeigenschaften, wie z.B. Korrosionsschutz, Verlauf Steinschlagfestigkeit oder Haftung möglich.

In der DE-B-26 50 611 wird die Beschichtung von Stahl-Verbundblechen mit einer Suspension eines in Wasser dispergierbaren Sols einer Metallverbindung mit einem organischen Kunstharzpulver beschrieben. Der aus dieser Suspension abgeschiedene Überzug wird durch Erhitzen unter zumindest zeitweiligem Aufschmelzen des Kunstharzpulvers ausgehärtet. Zur Haftungsverbesserung wird der Suspension ein wasserlösliches oder wasserdispergierbares Polymerisat zugesetzt.

In der EP-A-O 052 831 werden Elektrotauchlack-Überzugsmaterialien beschrieben, die aus mit Säure zu protonierenden und löslich zu machenden kationischen Kunstharzen bestehen und eindispergierten ionischen Kunststoffpulvern. Diese Kunststoffpulver können gegebenenfalls schon Pigmente und Füllstoffe enthalten. Auch diese Überzugsmittel schmelzen beim Einbrennen und Vernetzen auf und führen so zu einem glatten Überzug. Als eindispergierbare Kunststoffpulver werden ionische Gruppen enthaltende Epoxidharze, Polyesterharze, Acrylatharze, Polyurethanharze und Polyamidharze beschrieben.

Die in dieser Literatur beschriebenen Überzugsmittel haben den Nachteil, daß, um einen glatten Überzug zu erhalten, der Film bei dem Vernetzen über die Schmelztemperatur der Kunstharzpulver erhitzt werden muß.

In der EP-A-O 259 181 werden Überzugsmittel für die Elektrotauchlackierung auf der Basis von wasserdispergierbaren elektrisch abscheidbaren Harzen beschrieben, die Polymermikroteilchen mit einem Erweichungspunkt der mindestens 10 °C höher als die Badtemperatur liegt, mit einem Löslichkeitsparameter, der sich um nicht mehr als 1,0 vom Löslichkeitsparameter des wasserdispergierbaren Harzes unterscheidet, einem Brechungsindex, der sich um 0,02 bis 0,3 von dem des wasserdispergierbaren Harzes unterscheidet oder einer Vernetzungsdichte von 0,01 bis 5,05 mmol/g, enthalten. Diese Polymermikroteilchen enthalten an ihren Oberflächen ionische Gruppen mit der gleichen Polarität wie das wasserdispergierbare Harz. Der Zusatz der Polymermikroteilchen soll den Umgriff und die Dispersionsstabilität verbessern, dem Überzug einen matten Finish verleihen und die Fließfähigkeit bei Elektroabscheidung steuern. Bei den bekannten Elektrotauchlackierungsüberzügen treten jedoch verschiedene Nachteile auf, wie eine schlechte Kantenabdeckung, eine schlechte Haftung auf dem Untergrund oder von Nachfolgeschichten sowie eine unzureichende Schlagfestigkeit.

Aufgabe der Erfindung ist daher die Bereitstellung von wässrigen Überzugsmitteln zur Elektrotauchlackierung, die zu einer guten Haftung am Substrat oder zu Nachfolgeschichten führen, Überzüge mit glatter Oberfläche und guter Schlagzähigkeit (beispielsweise einem guten Steinschlagschutz) ergeben und die eine verbesserte Rheologie beim Einbrennen besitzen und so zu einer guten Kantenabdeckung führen.

Es hat sich gezeigt, daß diese Aufgabe gelöst werden kann durch ein an der Kathode oder der Anode abscheidbares wäßriges Überzugsmittel gemäß dem eingangs definierten Gattungsbegriff, das dadurch gekennzeichnet ist, daß es als dispergierte Polymerteilchen 5 bis 75 Gew.-% bezogen auf den Festkörperanteil von filmbildendem Harz und gegebenenfalls vorhandenem Vernetzer an Polymerpulvern enthält, die bevorzugt frei von ionischen oder ionisierbaren Gruppen sind, mit einem durchschnittlichen Teilchendurchmesser von 0,1 bis 100 µm und einer Glasübergangstemperatur von ≧ 70 °C (gemessen nach DSC = Differential Scanning Calorimetry) enthält und die Polymerpulver aus
a) einem oder mehreren vernetzten Harnstoff-Aldehyd-Harzen, Triazin-Aldehyd-Harzen und Phenol-Aldehyd-Harzen oder
b) einem oder mehreren unvernetzten Homo- oder Copolymeren von Acrylnitril und/oder Methacrylnitril mit einem Gewichtsmittel des Molekulargewichtes (M̅w) von über 100000 und einem Gewichtsanteil von mindestens 70 % copolymerisiertem Acrylnitril, oder
c) Gemischen aus a) und b)

bestehen, die von dem im Überzugsmittel enthaltenen Bindemittel, wasserdispergierbaren filmbildenden Harz, Vernetzer, Anreibeharz oder Lösemittel bis 80 °C nicht angelöst oder gequollen werden.

Die Polymerpulver werden dem Überzugsmittel in mit dem Bindemittel, dem wasserdispergierbaren filmbildenden Harz oder Vernetzer, insbesondere jeweils einem Teil davon, und/oder mit einem Anreibeharz vermahlener Form zugesetzt.

Im Rahmen der Erfindung hat es sich gezeigt, daß durch den Zusatz der Polymerpulver zu den wäßrigen Überzugsmitteln Überzüge erhalten werden, die eine glatte Oberfläche zeigen und keine Oberflächenstörungen, wie beispielsweise Krater aufweisen. Zur Vermeidung von Kratern sind sonst üblicherweise Additive oder Pigmente zuzugeben, die den Verlauf des Films beim Einbrennen stören und zu einer deutlich rauhen Oberfläche führen. Ein zusätzlich auftretender Mangel ist häufig eine verschlechterte Nachfolgeschichthaftung. Diese Nachteile werden durch die vorliegende Erfindung ausgeräumt. Es hat sich im Rahmen der Erfindung darüberhinaus gezeigt, daß durch den erfindungsgemäßen Zusatz von Polymerpulvern ausgezeichnete Rheologieeigenschaften erzielt werden, was insbesondere durch den Zusatz von Harnstoff-Aldehyd-Harzpulvern, Triazin-Aldehyd-Harzpulvern und Phenol-Aldehyd-Harzpulvern erfolgt. Es wird so eine gleichmäßige Mattierung der Oberfläche erreicht, wobei gleichzeitig eine gute Kantenabdeckung erzielt wird. Über die Menge der eingesetzten Aldehyd-Harzpulver können diese Eigenschaften daher abgestuft werden. Ferner, wird, insbesondere durch den Zusatz der Polyacrylnitrilpulver (Homo- oder Copolymere) eine besonders gute Haftung vom Substrat oder zu Nachfolgeschichten erzielt. Darüberhinaus ergibt sich eine verbesserte Schlagzähigkeit, die insbesondere auch in der Kälte zu beobachten ist. Daher sind die erfindungsgemäßen Überzugsmittel besonders zur Ausbildung von Steinschlagschutzschichten beispielsweise im Kraftfahrzeugbau geeignet. Diese Eigenschaften treten auch bei Anwendung von Nachfolgeaufbauten auf. Über die eingesetzte Menge der Polyacrylnitrilpulver sind diese Eigenschaften optimal beeinflußbar.

Die verwendeten Polymermikroteilchen sollen vom Bindemittel, Anreibeharz oder von im Bindemittel vorhandenen Lösemitteln bei Temperaturen bis zu 80 °C nicht angelöst oder angequollen werden. Unter Anwendungs- oder Herstellungsbedingungen sollen sie also unverändert vorliegen.

Die Glasübergangstemperatur beträgt ≧ 70 °C (gemessen nach DSC) und wird so gewählt, daß unter den Herstellungs- und Applikationsbedingungen der Überzugsmittel eine Erweichung der vernetzten oder unvernetzten Polymerpulver nicht auftritt. Anderenfalls können Probleme beim Vermahlen (Anreiben) der Polymerpulver unter Bildung einer Paste entstehen, was zu einem nicht stabilen, inhomogenen Produkt führen kann. Ebenso wird dadurch ein Quellen der Polymerpulver vermindert.

Da bei der Herstellung von Überzügen ein Nacharbeiten der Grundierung nicht immer zu vermeiden ist, wie z.B. Schleifen, müssen die eingebrannten Filme geeignete Eigenschaften aufweisen, d.h. es soll z.B. beim Bearbeiten mit Schleifpapier eine ausreichende Standzeit gegeben sein. Ist die Erweichung der Polymerpulver bei zu niedrigen Temperaturen gegeben, so werden die Bearbeitungsmittel rasch unbrauchbar.

Ein Positiveffekt der hohen Glasübergangstemperatur ist auch im eingebrannten Film zu beobachten. Die Polymerpulver mit einer Glasübergangstemperatur von ≧ 70 °C ergeben nämlich eine gute Schlagfestigkeit.

Der Teilchendurchmesser der verwendeten Polymerpulver sollte im angegebenen Bereich von 0,1 bis 100 µm je nach der gewünschten zu erzielenden Schichtdicke ausreichend klein sein, damit im abgeschiedenen und eingebrannten Film eine homogene und glatte Oberfläche erzielt wird. Eine rauhe, unebene Oberfläche ergibt zwar häufig eine gute Haftung der Nachfolgeschichten, ist aber wegen der optischen Mängel z.B. für eine Automobilgrundierung nicht geeignet.

Die verwendeten Aldehyd-Harzpulver der erfindungsgemäßen Überzugsmittel sind hoch vernetzt, und weisen keinen Schmelzpunkt auf. Die verwendeten Polyacrylnitrilpulver haben ein Molekulargewicht (M̅w) von über 100000. Sie sind nicht chemisch vernetzt, sie haben aber keinen Schmelzpunkt, da sie sich bei Temperaturen oberhalb von 300 °C zersetzen, bevor sie schmelzen können. Die verwendeten Polymerpulver sind im wesentlichen chemisch inert, d.h. sie reagieren nicht mit den eingesetzten filmbildenden basischen Harzen.

Die verwendeten Polymerpulver können in üblicher, dem Fachmann bekannter und in der Literatur beschriebener Weise hergestellt werden. Sie können bereits bei der Herstellung als Pulver anfallen, die anschließend auf die gewünschte Korngröße vermahlen werden. Durch geeignete Reaktionsführung ist es aber auch möglich, von vornherein gewünschte Korngrößen zu erzielen. Die angefallenen Pulver können nach Abtrennung aus dem Reaktionsmedium eingesetzt werden, oder auch in Form von wäßrigen Suspensionen erhalten werden. Gegebenenfalls eingesetzte Suspensionen müssen nicht lagerstabil sein; sie können auch sedimentieren. Zum Einsatz in den erfindungsgemäßen Überzugsmitteln werden sie zu einer wäßrigen Paste angerieben (vermahlen), die längere Zeit stabil bleibt. Zum Anreiben können übliche Anreibe-Bindemittel, sowie ein Teil des Bindemittels oder auch ein Teil des filmbildenden Harzes oder Vernetzungsmittels verwendet werden.

Die Teilchengrößenverteilung der eingesetzten Polymerpulver ist in weiten Bereichen variabel. Über ihre Zusammensetzung können gegebenenfalls spezielle Eigenschaften, wie die Rheologie, gezielt beeinflußt werden. Es muß lediglich sichergestellt sein, daß der maximale Teilchendurchmesser nicht zu einer verschlechterten Oberfläche des abgeschiedenen eingebrannten Lackfilms führt.

Die verwendeten Polyacrylnitrilpulver können nach üblichen Verfahren hergestellt werden. Beispiele für Verfahren sind die dem Fachmann geläufige Emulsionspolymerisation oder Suspensionspolymerisation von Acrylnitril oder Methacrylnitril, wie in "Chemische Technologie" von Winacker-Küchler, Band 6, Organische Technologie 2, Karl Hansa-Verlag München-Wien 1982 beschrieben. Die erfindungsgemäß verwendeten Polyacrylnitril-Polymerpulver enthalten mindestens 70 % Acrylnitril und/oder Methacrylnitril. Weiterhin können zur Herstellung der Copolymeren dem Acrylnitril und/oder Methacrylnitril ein oder mehrere copolymerisationsfähige Monomere zugesetzt werden. Beispiele sind Acrylester oder Methacrylester von C₁ bis C₂₂ -Alkoholen, z.B. Methylmethacrylat, Butylmethacrylat, Octylmethacrylat, Ethylacrylat, Isobutylacrylat, (Meth)Acrylsäureester von perfluorierten C₁ bis C₂₂ -Alkoholen, Vinylaromaten mit bis zu 20 C-Atomen, z.B. Styrol, Vinyltoluol, die Ester von Maleinsäure oder Fumarsäure mit C₁ bis C₂₂ -Alkoholen, Vinylchlorid, Ethylen und Butadien.

Weiterhin können beispielsweise ungesättigte Carbon-, Sulfon- oder Phosphonsäuren und ihre Ester als Comonomere eingesetzt werden, wie Crotonsäure, Itaconsäure, Vinylsulfonsäure, Acrylamidopropylmethansufonsäure, Vinylphosphonsäure und deren Ester. Zu den geeigneten Comonomeren gehören ebenfalls ungesättigte primäre, sekundäre und/oder tertiäre Amine, wie z.B. Dimethylaminoneopentylmethacrylat, Dimethylaminoneopentylacrylat, 2-N-Morpholinoethylmethacrylat, 2-N-Morpholinoethylacrylat oder auch Amide der Acryl- oder Methacrylsäure, wie z.B. Acrylamid, Dimethylmethacrylamid oder Methylbutylacrylamid.

Zusätzlich können auch andere funktionelle Monomere, die copolymerisierbar sind, eingesetzt werden. Sie können Hydroxy-, Silan- oder Epoxidgruppen enthalten, wie z.B. Vinyltrimethoxysilan, Vinyltributoxysilan, Methacryloxypropyltrimethoxysilan, Vinyltris(methoxyethoxy)silan, Vinyltriacetoxysilan, Hydroxyethylmethacrylat, Hydroxybutylacrylat, Glycidylacrylat, Glycidylmethacrylat oder auch Polyhydroxyethylacrylat.

Die erfindungsgemäß eingesetzten Polyacrylnitrilpulver sollen mindestens 70 Gew.-% (bezogen auf die eingesetzten Monomeren) Acrylnitril und/oder Methacrylnitril enthalten., bevorzugt über 90 %. Durch Wahl der entsprechenden Monomere können Eigenschaften der Polyacrylnitrilpulver beeinflußt werden, wie z.B. die Glasübergangstemperatur. Ebenso kann das Schmelzverhalten beeinflußt werden. Die Teilchengrößenverteilung ist über das gewählte Herstellungsverfahren bzw. über die dabei benutzten Verfahrensparameter beeinflußbar.

Bei der Herstellung in wäßriger Suspension werden üblicherweise geeignete nicht ionische, anionische oder kationische Emulgatoren mitverwendet. Ebenso können übliche Schutzkolloide eingesetzt werden, wie z.B. Celluloseether, Polyvinylalkohole, Polyvinylpyrolidone. Das Starten einer radikalischen Polymerisation geschieht durch Einsatz von üblichen Radikalketten initiierenden Verbindungen, wie z.B. Azoverbindungen, Peroxide, Perester und Percarbonate. Beispiele für übliche Initiatorsysteme sind Azoisobutyronitril, Benzoylperoxid, Dicyclohexylperoxydicarbonat, Wasserstoffperoxid, Natriumpersulfat oder tert. Butylhydroperoxid.

Die Auswahl der Monomeren, Comonomeren und der üblichen Hilfsstoffe erfolgt so, daß die Anforderungen an das Polyacrylnitrilpulver, wie Teilchendurchmesser, Glasübergangstemperatur, Molekulargewicht, sowie Lösungsverhalten erreicht werden. Nach der Herstellung können die Polyacrylnitrilpolymere entweder in wäßriger Suspension weiterverarbeitet (z.B. mit Pastenharz dispergiert) werden, oder sie werden zu Pulvern getrocknet und dann gegebenenfalls nach weiterem Vermahlen zu dem erfindungsgemäßen Zweck eingesetzt.

Die vernetzten Aldehyd-Polymerpulver können durch Reaktion von Harnstoff, Triazin und/oder Phenol mit Aldehyd, bevorzugt mit Formaldehyd oder Formaldehyd abspaltenden Verbindungen, hergestellt werden. Die Bedingungen hinsichtlich der eingesetzten Mengen an Reaktionspartnern, der Reaktionstemperatur und des Reaktionsmediums, in welcher die Reaktion durchgeführt wird, können so gewählt werden, daß vernetzte, unschmelzbare Massen entstehen. Dem Fachmann sind solche Bedingungen geläufig.

Vernetzte Triazin-Harze, wozu bevorzugt vernetzte Polymermassen aus Melamin-Aldehyd, Benzoguanamin-Aldehyd und Acetoguanamin-Aldehyd gehören, vernetzte Harnstoff-Harze und vernetzte Phenolharze werden z.B. in Methoden der Organischen Chemie (Houben-Weyl), Band 2, Makromolekulare Stoffe, in den Kapiteln "Polyadditions- bzw. Polykondensationsprodukte von Carbonyl- und Thiocarbonylverbindungen auf den Seiten 193 bis 365 beschrieben.

Vernetzte Phenol-Aldehydharze werden z.B. auch unter dem Stichwort "Resit" beschrieben in "Chemie der Phenolharze" von K. Hultzsch, Springer-Verlag, 1950.

Erhaltene unschmelzbare Polymermassen können auf die gewünschte Teilchengröße gebracht werden, wobei Mahlprozesse mit bekannten Mahlaggregaten zur Teilchenzerkleinerung bevorzugt werden.

Die verwendeten Kunststoffpulver sind an der Oberfläche im wesentlichen frei von ionischen Gruppen, d.h. ionische Gruppen sind nicht notwendig für eine weitere Verarbeitung zu Elektrotauchlack-Überzugsmitteln. Die Pulver können jedoch auch ionische Gruppen bzw. saure oder basische Gruppen zur Erzielung von erwünschten Eigenschaften, wie z.B. verbesserte Dispersionsstabilität, enthalten. Kunstharzpulver mit sauren Gruppen können wie nichtionische Pulver für anodisch und kathodisch abscheidbare Elektrotauchlack-Überzugsmitteln, solche mit basischen Gruppen ebenfalls für anodisch und kathodisch abscheidbare Elektrotauchlack-Überzugsmittel verwendet werden.

Die Bindemittel für die an der Anode oder an der Kathode abscheidbaren Systeme sind die üblichen Elektrotauchlack (ETL)-Bindemittel oder Bindemittelgemische. Sie sind an der Kathode abscheidbar, wenn sie positiv geladene ionische oder in ionische Gruppen überführbare Substituenten tragen. Sie sind an der Anode abscheidbar, wenn sie negativ geladene oder in negativ geladenen Gruppen überführbare Substituenten tragen.

Die Bindemittel für anodisch abscheidbare Tauchlacke (ATL) enthalten saure Basisharze, deren Säurezahl zwischen 35 und 300 liegen können, und deren zahlenmittlere Molmasse zwischen 300 und 10000 g/mol liegen kann. Als Säuregruppen treten -PO₃H, -SO₃H und/oder bevorzugt -COOH auf. Als Neutralisationsmittel werden basische Verbindungen eingesetzt, z.B. primäre, sekundäre oder tertiäre Amine mit aliphatischen und/oder aromatischen Resten sowie Ammoniak.

Basisharze sind beispielsweise Reaktionsprodukte aus Maleinsäureanhydrid mit trocknenden und halbtrocknenden fetten Ölen und mit synthetischen Ölen wie Polybutadienöl, Polyesterharze, Epoxidharzester, Polyurethanharze und Poly(meth-)acrylatharze. Die Basisharze können selbst- oder fremdvernetzend sein. Als Vernetzungsmittel können Triazinharze, Phenolharze, und/oder blockierte Isocyanate eingesetzt werden. Bindemittel dieses Typs werden umfangreich in der Literatur, z.B. in der DE-A-28 24 418, beschrieben.

Für die Herstellung der erfindungsgemäßen kathodisch abscheidbaren Tauchlacke (KTL) können die für die Elektrotauchlackierung üblichen Bindemittel und Vernetzer verwendet werden. Beispielsweise sind selbstvernetzende filmbildende basische Harze möglich, ebenso wie basische filmbildende Harze, die einen zusätzlichen üblichen Vernetzer benötigen, oder auch Mischungen davon. Es handelt sich dabei um Harze, die ionische oder nach Neutralisation ionische Gruppen-enthalten.

Beispiele für die in den Beschichtungsbädern eingesetzten Basisharze sind in EP-A-O 082 291, EP-A-O 234 395, oder EP-A-O 209 854 beschrieben. Es sind übliche primäre, sekundäre oder tertiäre Aminogruppen enthaltenden Aminoepoxidharze mit einer Aminzahl zwischen 45 bis 120 und einer Hydroxylzahl von 50 bis 500. Die Höhe der Aminzahl beeinflußt die Löslichkeit des Harzes, gleichzeitig auch die Güte der Oberfläche des eingebrannten Lackfilms. Die reaktiven Hydroxylgruppen und gegebenenfalls die reaktiven Aminogruppen sind für die Vernetzungsreaktion wesentlich. Ihre Anzahl beträgt mindestens 2, bevorzugt mindestens 4 pro Molekül. Ist der Vernetzungsgrad zu gering, so bleiben die Filme nach der Vernetzung gegen äußere Einflüsse empfindlich. Als Epoxidharze werden auch epoxidgruppenhaltige, aliphatische oder cycloaliphatische Kohlenwasserstoffe verstanden, die durch Epoxidierung mit Persäuren herzustellen sind. Die Aminogruppen werden zweckmäßig durch Addition von NH-reaktiven Verbindungen mit den Epoxidgruppen des Harzes eingeführt. Sie sollten nicht im Überschuß eingesetzt werden, um mögliche Verunreinigung mit niedermolekularen NH-Produkten und Nebenreaktionen zu verhindern.

Weitere verwendbare Bindemittel sind beispielsweise Umsetzungsprodukte von Bisphenolen, wie z.B. Bisphenol A oder Bisphenol F mit primären Aminen und Formaldehyd. Diese können mit einem üblichen halbverkappten Isocyanat als Reaktionsprodukt aus einem aliphatischen und/oder aromatischen Di- oder Polyisocyanat und einem primären Amin umgesetzt werden. Als Amin können aliphatische Amine und/oder Alkanolamine eingesetzt werden. Die Umsetzungsprodukte sollen durchschnittlich eine sekundäre Aminogruppe pro Molekül enthalten. Gegebenenfalls können vorhandene OH-Gruppen mit einer Epoxidverbindung und/oder weiteren Isocyanatgruppen umgesetzt werden.

Einsetzbare Bindemittel sind beispielsweise auch in der EP-A-O 261 385 beschrieben. Sie sind durch Copolymerisation von Glycidyl(meth)acrylaten oder Allylglycidylethern mit ungesättigten Monomeren zu erhalten. Als ungesättigte olefinische Monomere sind z.B. gesättigte lineare oder verzweigte Acryl- oder Methacrylsäureester zu verstehen, Styrol oder auch funktionalisierte Acrylsäure und/oder Methacrylsäureester. Die zur Löslichkeit notwendigen Aminogruppen können durch Umsetzen der Epoxidgruppe mit sekundären Aminen oder Aminoalkoholen eingeführt werden. Eine weitere Möglichkeit besteht über Einpolymerisation von in der Estergruppe linearen oder cyclischen sekundären oder tertiären stickstoffenthaltenden (Meth)Acrylverbindungen.

Die Harze können selbst- oder fremdvernetzend sein. Als Vernetzer geeignete Verbindungen sind z.B. Triazinharze, blockierte Isocyanate, umesterungs- oder umamidierungsfähige Vernetzer oder Vernetzer mit endständigen Doppelbindungen geeignet. Diese Vernetzer sind geläufig und in der Literatur beschrieben.

Vernetzer auf Triazinbasis sind z.B. in der EP-A-O 245 786 beschrieben. Geeignete Isocyanatverbindungen werden z.B. in "Farbe und Lacke", 12, 1983, Seite 928 ff. beschrieben. Es sind übliche Di- oder Polyisocyanate auf Basis von aliphatischen und/oder aromatischen Isocyanaten oder Gemische davon, die mit bekannten Blockierungsmitteln wie Alkoholen, Phenolen, Oximen, Lactamen, Hydroxymethacrylaten, Alkanolaminen, substituierten sekundären Aminen oder aromatischen Alkoholen umgesetzt werden. Vernetzer vom Umesterungs- oder Umamidierungstyp sind in der DE-A-34 36 345 beschrieben. Sie reagieren mit Bindemitteln, die aktive Wasserstoffatome tragende Heteroatome im Bindemittelsystem aufweisen, wie z.B. OH-, SH- und NH-Gruppen. Ebenso können sie durch Umsetzung mit Carbonsäureestern oder -amiden vernetzen.

Die Harze können als Einzelkomponente (selbstvernetzend) oder als Gemisch eingesetzt werden. Dazu werden sie als lösungsmittelhaltige Form mit der notwendigen Menge einer üblichen Säure, z.B. Ameisensäure, Essigsäure, Alkylphosphorsäure oder Milchsäure, partiell neutralisiert und können danach in Wasser dispergiert werden. Für besondere Zwecke können mehrbasige Säuren, wie Phosphorsäure oder Zitronensäure verwendet werden.

Bevorzugt werden basische Harze oder Mischungen von basischen Harzen, die zumindest zu 30 Gew.-% aus Aminoepoxidharzen bestehen. Besonders vorteilhaft sind solche Aminoepoxidharze auf der Basis von Bisphenol A-Aminoepoxiden. Diese werden dann mit üblichen verkappten Isocyanaten oder Umesterungshärtern oder einem Gemisch von beiden vernetzt.

Zur Einarbeitung der erfindungsgemäß verwendeten Polymerpulver in die Überzugsmittel werden die Polymerpulver zu einer Paste angerieben (vermahlen). Hierbei ist es möglich die einzusetzenden Polymerpulver zusammen mit dem Bindemittel, dem wasserdispergierbaren filmbildenden Harz, dem Vernetzer oder Teilen davon und/oder einem Anreibeharz (Pastenharz) zu einer Paste zu verarbeiten, wobei gegebenenfalls auch Lösungsmittel zugesetzt werden können. Dies erfolgt beispielsweise durch Dispergieren in einem schnellaufenden Rührwerk. Anschließend kann, gegebenenfalls auch nach Zwischenlagerung, auf einem geeigneten Aggregat vermahlen werden. Es können dann noch fehlende Bindemittel-, Harz-, Vernetzer-, Pigment und/oder Badbestandteile zugegeben und gegebenenfalls weiter vermahlen werden. Durch Neutralisation mit einer geeigneten Menge an Neutralisationsmittel und Wasserzusatz kann dann die gewünschte Überzugsmittelzusammensetzung erstellt werden.

Gemäß einer weiteren Verfahrensweise können zuerst die üblichen filmbildenden Harze nach Neutralisation in die Wasserphase unter Bildung einer Lösung oder Dispersion überführt werden. Zu dieser Dispersion werden dann die Polymerpulver über eine Paste eingeführt.

Wenn die erfindungsgemäß verwendeten Polymerpulver nicht in dem Bindemittel, Bindemittelbestandteilen oder Teilen davon zu einer Paste angerieben werden, so werden Pastenharze bzw. Anreibeharze eingesetzt, wie sie üblicherweise zur Herstellung von Pigmentpasten als Anreibebindemittel verwendet werden. Derartige Anreibebindemittel werden beispielsweise in EP-A-O 107 088, EP-A-O 183 025 oder in der EP-A-O 270 877 beschrieben. Es handelt sich um Bindemittel, die ein hohes Benetzungsvermögen für Pigmente und Füllstoffe besitzen. Dabei sollen sie gut verträglich mit dem Bindemittel des wäßrigen Überzugsmittels sein und die Eigenschaften der Bindemittelmischung nicht verändern. Sie können gegebenenfalls über funktionelle Gruppen mit dem Bindemittel vernetzen.

Es sind beispielsweise Umsetzungsprodukte aus modifizierten Polyepoxiden, bevorzugt auf Basis von aliphatischen oder aromatischen Diolen, wie z.B. Polyalkylenglykol oder Bisphenol A oder Phenolnovolaken, mit primären und/ oder sekundären Aminogruppen von aliphatischen Mono- und/oder Diaminen. Diese Verbindungen können weiter modifiziert werden, z.B. zu Oxazolidinringen enthaltenden Verbindungen, oder über H-reaktive Gruppen, wie z.B. OH oder NH, mit isocyanatgruppenhaltigen Verbindungen umgesetzt werden.

Weitere Beispiele sind Produkte auf Basis von Polyepoxidharzen aus aromatischen oder aliphatischen Diolen, die gegebenenfalls mit funktionellen Gruppen, z.B. Ester- oder verkappte Isocyanatgruppen, modifiziert sind, die mit Polyphenolen umgesetzt werden können. Diese Verbindungen sind weiter mit primären oder sekundären oder tertiären Aminen umgesetzt, wie z.B. Alkylamine, Dialkylamine, Alkanolamine, Trialkylamine oder in der Seitenkette funktionalisierte Verbindungen.

Zur Löslichkeit der Anreibebindemittel sind in die Moleküle saure oder basische Gruppen eingeführt, die mit Neutralisationsmitteln (basisch oder sauer) löslich gemacht werden. Beispielsweise werden Aminogruppen eingeführt, die entweder mit einer üblichen Säure neutralisiert werden, oder durch Umsetzung in quartäre Ammoniumgruppen überführt werden. Über die Anzahl der sauren oder basischen Gruppen, z.B. der Aminofunktionalitäten, ist die Löslichkeit zu beeinflussen.

Ebenso hat die Anzahl der OH-Gruppen einen Einfluß auf die Dispergierbarkeit in Wasser.

Diese wäßrigen Pasten können beispielsweise hergestellt werden, indem man übliche in organischen Lösemitteln gelöste Pigmentanreibeharze gegebenenfalls mit einer zur Neutralisation notwendigen Menge Säure versetzt, mit vollentsalztem Wasser und weiteren Hilfsstoffen, wie z.B. Netzmittel oder Lösungsmittel, in eine dünnviskose wäßrige Dispersion überführt, und dann mit einem schnellaufenden Rührwerk die Pigmente einarbeitet. Es ist auch möglich, einen Anteil des filmbildenden Harzes einzusetzen.

Die erfindungsgemäßen wäßrigen Überzugsmittel enthalten neben den Polymerpulvern, den Bindemitteln und gegebenenfalls Vernetzern gegebenenfalls übliche lacktechnische Additive, Pigmente und Lösemittel. Als Pigmente können übliche Pigmente und Füllstoffe eingesetzt werden, z.B. Ruß, Titandioxid, feindisperses Siliciumdioxid, Aluminiumsilikat, Metalleffektpigmente, organische und anorganische Farbpigmente, Korrosionsschutzpigmente wie Blei- und Chromatverbindungen. Die Pigmente und Füllstoffe können zusammen mit den erfindungsgemäß eingesetzten Polymerpulvern zu Pasten verarbeitet werden. Sie können jedoch auch getrennt davon zu Pigmentpasten verarbeitet werden, wobei die gleichen Bindemittel, Bindemittelbestandteile bzw. Pastenharze verwendet werden können, wie sie auch für das Anreiben der erfindungsgemäß eingesetzten Polymerpulver eingesetzt werden.

Die so hergestellten Pasten (Pasten mit den erfindungsgemäß eingesetzten Polymerpulvern, Pigmentpasten und/oder Polymerpulver und Pigmente enthaltenden Pasten) werden zur Einstellung einer brauchbaren VermahlViskosität mit vollentsalztem Wasser oder Lösemittel versetzt und dann auf einem üblichen geeigneten Aggregat vermahlen. Gegebenenfalls können nach dem Dispergieren weitere Additive zugefügt werden. Die entstehenden Pasten sind wäßrig und haben ein geringes spezifisches Gewicht. Sie besitzen einen hohen Festkörper, weisen aber eine hohe Lagerstabilität in bezug auf Sedimentation und Viskosität auf.

Aus einer wäßrigen Dispersion der Bindemittel und den Pigmentpasten können dann Elektrotauchlack-Beschichtungsbäder angesetzt werden. Diese werden mit Wasser auf den gewünschten Festkörpergehalt verdünnt und können danach auf dem Fachmann bekannte Art und Weise als Beschichtungsbäder für metallische oder leitende Substrate eingesetzt werden. Nach dem Verfließen der abgeschiedenen Filme und dem Vernetzen entstehen dichte, homogene Elektrotauchlacküberzüge. Diese zeichnen sich durch eine gute Oberfläche, durch eine gute Kantenbedeckung, durch ein gutes Steinschlagverhalten und durch eine geringe Dichte aus. Durch die geringe Dichte der Überzugsbäder ist die Neigung zur Sedimentation sehr gering und die Ergiebigkeit sehr hoch.

Das Verfließen und das Vernetzen kann bei Raumtemperatur oder bei höherer Einbrenntemperatur stattfinden. Weiterhin ist es möglich, auf diese Lackschicht eine (oder mehrere) weitere Schicht aufzubringen. Die Vernetzung kann nach jeder einzelnen Lackschicht erfolgen, oder es wird naß-in-naß beschichtet und ein einziger Einbrennvorgang durchgeführt.

Beispielsweise können auf die erfindungsgemäß aus wäßriger Lösung oder Dispersion elektrisch abgeschiedene Schicht vor oder nach dem Einbrennvorgang ein Decklack, oder ein Füller und weitere Schichten appliziert werden. Für Automobil-Karossen, deren Lackierungen einen Metalleffekt aufweisen soll, ist folgender Lackaufbau geeignet: kathodisch abgeschiedene Elektrotauchgrundierung, Füller (wäßrig oder nicht-wäßrig), Aluminiumteilchen und Pigmente und/oder Farbstoffe enthaltender Basislack (wäßrig oder nicht-wäßrig) und transparenter Decklack (wäßrig, nicht-wäßrig oder aus Lackpulver). Auf die Grundierung kann gegebenenfalls vor dem Applizieren des Füllers ein wäßriger oder nicht-wäßriger Steinschlagschutz-Zwischengrund appliziert werden.

Die erfindungsgemäßen Überzugsmittel sind neben der Eignung für die Lackierung von Automobilkarossen auch als Industrielacke geeignet, beispielsweise für die Lackierung von Kühlschränken, Waschmaschinen, Büromöbeln, landwirtschaftlichen Maschinen, Baumaschinen, Schrauben, Federn und Kraftfahrzeug-Zubehörteile.

In den folgenden Beispielen beziehen sich alle Prozentangaben und Teile (T) auf das Gewicht. Der Festkörper wird analog DIN 53 bei 150°C bestimmt.

### Herstellung von Bindemitteln:

### Beispiel 1

Gemäß EP-A-12 463 werden 391 g Diethanolamin, 189 g 3-(N,N-Di-methylamino)-propylamin und 1147 g eines Adduktes aus 2 mol Hexandiamin-1,6 und 4 mol Glycidylester der Versaticsäure (Cadura ^{R} E 10 von Shell) zu 5273 g Bisphenol A Epoxydharz (Epoxidäquivalentgewicht ca. 475) in 3000 g Ethoxypropanol gegeben. Das Reaktionsgemisch wird 4 Std. unter Rühren bei 85°C bis 90°C gehalten und danach eine Stunde bei 120°C. Anschließend wird mit Ethoxypropanol auf einen Festkörper von 60 % verdünnt.

### Beispiel 2

Es werden 228 Teile Bisphenol A (1-mol) mit 260 Teilen Diethylaminopropylamin (2 mol) und 66 Teilen Paraformaldehyd (91 %;2 mol) in Gegenwart von 131 Teilen Toluol als Azeotropschleppmittel bis zur Abtrennung von 42 Teilen Reaktionswasser umgesetzt. Nach Addition von 152 Teilen Diethylenglykoldimethylether und Kühlen des Produktes auf 30°C werden innerhalb von 45 Min. 608 Teile (2-mol) eines mit 2-Ethylhexanol halbblockierten Toluylendiisocyanats zugegeben. Nach Erreichen eines NCO-Wertes von praktisch null werden 1400 Teile dieser Lösung mit einer Lösung von 190 Teilen eines Epoxidharzes auf Basis von Bisphenol A (Epoxidäquivalentgewicht ca. 190) und 250 Teilen (1 mol) eines Glycidylesters einer gesättigten tertiären C₉ bis C₁₁ Monocarbonsäure in 389 Teilen Diethylenglykoldimethylether versetzt und bei 95°C bis 100°C bis zu einem Epoxidwert von O umgesetzt.

### Beispiel 3

a) 832 Teile des Monocarbonats von Epicote 828 werden mit 830 T. Capa 205 und 712 T. Diglykoldimethylether gemischt und bei 70 bis 140 °C mit ungefähr 0,3 % BF₃-Etherat zur Reaktion gebracht bis eine Epoxidzahl von O erreicht wird. Zu diesem Produkt (Festkörper 70 %, 2 Äquivalente Carbonat) werden bei 40 bis 80 °C in Gegenwart von 0,3 % Zn-Acetylacetonat als Katalysator 307 Teile eines Umsetzungsproduktes aus 174 T. Toluylendiisocyanat (2 Äquivalente NCO) mit 137 T. 2-Ethylhexanol unter Zugabe von 0,3 % Benzyltrimethylammoniumhydroxid (Triton B) mit einem NCO-Gehalt von ca. 12,8 % gegeben. Es wird bis zu einem NCO-Wert von ca. null umgesetzt und dann mit Diglykoldimethylether auf ca. 70 % Festkörper eingestellt.
b) Zu 1759 Teilen eines Biscarbonats auf Basis Epicote 1001 ^{R} werden bei 60 bis 80 °C 618 T. eines Umsetzungsproduktes aus 348 T. Toluylendiisocyanat (80 % 2,4 Isomeres; 20 % 2,6 Isomeres) mit 274 T. 2-Ethylhexanol unter Zugabe von 0,3 % Benzyltrimethylammoniumhydroxid als Katalysator mit einem Rest-NCO-Gehalt von 12,8 % langsam zugegeben unter Katalyse von 0,3 % Triton B ^{R}. Die Reaktion wird bis zu einem NCO-Wert von ca. 0 fortgesetzt. Das Produkt hat einen Feststoffgehalt von 70 % Zu 860 Teilen Bishexamethylentriamin in 2315 T. Methoxypropanol gelöst werden bei einer Temperatur von 20 bis 40 °C 622 T. des Umsetzungsproduktes aus 137 T. 2-Ethylhexanol mit 174 T. Toluylendiisocyanat unter Benzyltrimethylammoniumhydroxid-Katalyse (0,3 %) zugegeben (NCO-Gehalt ca. 12,8 %) und bis zu einem NCO-Gehalt von ungefähr O umgesetzt. Dann werden 4737 T. des Umsetzungsproduktes b) und 3246 T. des Reaktionsproduktes a) (jeweils 70 % in Diglykoldimethylether) zugegeben und bei 60 bis 90 °C zur Reaktion gebracht. Bei einer Aminzahl von ca. 32 mg KOH/g wird die Reaktion beendet. Das entstehende Produkt hat einen Festkörper von 60 %.

### Beispiel 4

768 g Trimellithsäureanhydrid und 2000 g eines Glycidylesters einer verzweigten, tertiären C₁₀-Monocarbonsäure (Cadura E10^{R}) werden vorsichtig unter Rühren auf 190 °C erhitzt, wobei ab 90 °C eine exotherme Reaktion beginnt. Das Reaktionsgut wird auf 140 °C gekühlt und mit 2,75 g N,N-Dimethylbenzylamin versetzt. Das Reaktionsgut wird auf 145 °C gehalten bis eine Säurezahl unter 3 mg KOH/g erreicht wird. Wenn nötig, wird eine berechnete Menge Cadura R E10 zusätzlich zugegeben. Das Umsetzungsprodukt wird mit 2-Butoxyethanol auf 80 % Festkörper verdünnt.

### Beispiel 5

Zu 431 g einer Lösung (75 % in Ethylacetat) eines Umsetzungsproduktes aus 3 mol Toluylendiisocyanat mit 1 mol Trimethylolpropan (Desmodur L ^{R} ) werden bei 70 °C langsam unter Rühren 160 g Caprolactam zugefügt. Die Reaktionsmischung wird danach bei 70 °C gehalten, bis der NCO-Gehalt praktisch auf null gesunken ist. Dann wird 2-Butoxyethanol (204 g) zugegeben und das Ethylacetat über eine Kolonne bis zu einem Festkörper von 70 % abdestilliert.

### Beispiel 6

647 g eines Reaktionsproduktes aus 800 g Lackleinöl und 200 g Maleinsäureanhydrid (mischen und erhitzen auf 200 °C unter Inertgas, bis eine Probe mit Dimethylamin keine Farbreaktion ergibt) werden mit 162 g Kolophonium-Maleinsäureanhydrid-Glycerinester (Alresat KM 201 ^{R} )eine Stunde lang bei 160 °C umgesetzt und unter 100 °C in 82 g Triethylamin neutralisiert. Das entstandene Produkt wird in 1946 g Wasser dispergiert.

### Herstellung von Bindemitteldispersionen:

### Beispiel 7

Es wird aus 300 g eines Harzes nach Beispiel 1 und 700 g nach Beispiel 2 (bezogen auf den Festkörper) eine Mischung hergestellt. Diese wird durch Destillation weitgehend von Lösungsmittel befreit, mit 45 g Milchsäure (50 %) versetzt und in der Wärme mit vollentsalztem Wasser in eine Dispersion mit einem Festkörpergehalt von ca. 43 % umgewandelt.

### Beispiel 8

Es werden 550 g eines Harzes nach Beispiel 1, 79 g eines Harzes nach Beispiel 4 und 1740 g eines Harzes nach Beispiel 3 gemischt. Diese Mischung wird durch Destillation im Vakuum weitgehend von Lösemitteln befreit, unter Rühren mit 63,5 g 20 % Ameisensäure versetzt und dann durch verdünnen mit vollentsalztem Wasser in eine Dispersion mit einem Festkörper von ca. 38 % überführt.

### Herstellung von Pigmentpasten:

### Beispiel 9

Zu 110 g 2-Butoxyethanol, 10 g 2,4,7,9-Tetramethyl-5-decin-4,7-diol, 11 g Essigsäure, 310 g eines Bindemittel nach EP-A-O 183 025, Beispiel 3, (55 % in 2-Butoxyethanol) und 340 g vollentsalztem Wasser werden unter gutem Rühren 180 g Dibutylzinnoxid und 295 g basisches Bleisilikat gegeben. Diese Paste wird mit ca. 100 g Ethoxypropanol auf eine geeignete Viskosität eingestellt und dann auf einer Perlmühle auf die nötige Korngröße vermahlen.

### Beispiel 10

Zu 233 g eines Pastenharzes nach EP-A-O 183 025, Beispiel 3, 55 % in 2-Butoxyethanol werden unter einem schnellaufenden Rührer 9,5 g Ameisensäure (50 %), 518 g eines handelsüblichen vernetzten Harnstoff-Formaldehyd-Pulvers mit einer Glasübergangstemperatur von 85°C und einer Korngröße von <1 bis 22 µm gegeben und mit 1150 g vollentsalztem Wasser versetzt und auf einer Perlmühle vermahlen. Nach der Vermahlung werden unter weiterem guten Rühren 730 g einer Paste nach Beispiel 9 und 1150 g vollentsalztes Wasser zugegeben. Es entsteht eine stabile Pigmentpaste, deren Festkörper gegebenenfalls eingestellt werden kann.

### Beispiel 11

Es wird wie in Beispiel 10 verfahren mit der Maßgabe, daß nur 345 g Harnstoff-Formaldehyd-Pulver und zusätzlich 173 g eines handelsüblichen Polyacrylnitrilpulvers mit einem Gehalt von ca. 7 % Acrylsäuremethylester, mit einer Tg (nach DSC) von über 90°C, einem Molekulargewicht von >100000 und einer Korngröße von <1 bis 95 µm verwendet werden. Die erhaltene Paste wird entsprechend auf die nötige Kornfeinheit vermahlen und mit Wasser auf eine geeignete Lagerviskosität eingestellt.

### Beispiel 12

Es wird wie in Beispiel 10 verfahren, mit der Änderung, daß nur 172 g eines Harnstoff-Farmaldehyd-Pulvers eingesetzt werden zusammen mit 72 g
eines hochmolekularen handelsüblichen Polyacrylnitrilpulvers mit ca. 0,7 % Acrylsäuremethylester als Comonomer mit einem Molekulargewicht von 400000, einer Tg (nach DSC) von 75°C und einer Korngrößenverteilung zwischen 3 und 12 µm, und 174 g Titandioxid. Es entsteht eine stabile Pigmentpaste.

### Beispiel 13

Es werden 175 g eines Pastenharzes nach EP-A-O 183 025, Beispiel 3 (55 % in Butylglykol), mit 5 g Essigsäure (100 %), 800 g vollentsalztes Wasser, 300 g einer Paste nach Beispiel 9, 400 g eines Polyacrylnitrilpulvers analog Beispiel 12 und 30 g Ruß an einem schnellaufenden Rührwerk, z.B. einem Dissolver gemischt. Nach Einstellen der Viskosität mit ca. 60 g Wasser wird auf einer Perlmühle auf die nötige Kornfeinheit vermahlen, gegebenenfalls kann die Lagerviskosität noch nachträglich eingestellt werden.

### Herstellung und Anwendung eines anodisch abscheidbaren Lackes:

### Beispiel 14

Es werden 500 g eines Harzes nach Beispiel 6 mit 48 g eines Harnstoff-Formaldehyd-Pulvers analog Beispiel 10 und mit 72 g eines Polyacrylnitrilpulvers analog Beispiel 11 vermischt und auf einer Perlmühle vermahlen. Danach wird weiter mit 1100 g des Bindemittels nach Beispiel 6 verdünnt und mit 1400 g vollentsalztem Wasser ein anodisch abscheidbarer Lack hergestellt. Dieser Lack wird unter üblichen Bedingungen abgeschieden. Es entsteht ein homogener glatter sowie elastischer Film.

### Herstellung und Anwendung von kathodisch abscheidbaren Lacken:

### Beispiel 15

Es werden 1100 g einer Dispersion nach Beispiel 7 mit 1540 g vollentsalztem Wasser verdünnt und dazu unter gutem Rühren 360 g einer Paste nach Beispiel 10 gegeben. Es werden nach bekannter Art und Weise an der Kathode Stahlbleche beschichtet und bei 180 °C in 30 Min. eingebrannt.

Die Filmoberfläche (20 µm) ist glatt, homogen und gleichmäßig matt. Die Kanten der Substrate sind gleichmäßig bedeckt.

### Beispiel 16

Es werden 1100 g einer Dispersion nach Beispiel 7 mit 1540 g vollentsalztem Wasser verdünnt und unter Rühren mit 360 g einer Paste nach Beispiel 11 versetzt. Es werden Stahlbleche an der Kathode beschichtet, und wie im Beispiel 15 eingebrannt zu einer Filmstärke von ca. 20 µm. Der Film ist glatt, zähelastisch und gleichmäßig halbmatt.

### Beispiel 17

Es werden 1250 g einer Dispersion nach Beispiel 8 mit 1200 g vollentsalztem Wasser verdünnt und danach mit 360 g einer Paste nach Beispiel 12 versetzt. Mit Wasser wird ein Festkörper von ca. 19 % eingestellt. Aus diesem kathodischen Tauchlack (KTL) - Bad werden Stahlbleche beschichtet und analog Beispiel 15 vernetzt. Die Trockenschichtstärke beträgt ca. 30 µm. Die Oberfläche ist homogen, glatt, zähelastisch und halbmatt. Die Haftung zum Untergrund ist gut.

### Beispiel 18

Es werden am Dissolver 550 g Bindemittel von Beispiel 1, 31 g Bindemittel von Beispiel 4 und 169 g Bindemittel von Beispiel 5 mit 3,7 g Ameisensäure (50 %) pro 100 g Festkörper gemischt; 400 g einer Paste nach Beispiel 13 zugegeben und dann langsam mit 1900 g vollentsalztem Wasser verdünnt. Nach Rühren für mindestens 24 Std. werden Stahlbleche beschichtet und bei 165 °C in 30 Min. eingebrannt. Die Oberfläche ist homogen, glatt und zähelastisch.

## Patentansprüche

1. Wäßriges Überzugsmittel zur Elektrotauchlackierung, enthaltend ein Bindemittel aus einem oder mehreren wasserlöslichen oder wasserdispergierbaren filmbildenden Harzen, und gegebenenfalls einem oder mehreren üblichen Vernetzern für die filmbildenden Harze; sowie dispergierte Polymerteilchen und gegebenenfalls Pigmente, Lösemittel und/oder übliche lacktechnische Additive,
**dadurch gekennzeichnet,** daß es als dispergierte Polymerteilchen 5 bis 75 Gew.-% bezogen auf den Festkörperanteil von filmbildendem Harz und gegebenenfalls vorhandenem Vernetzer an Polymerpulvern enthält, mit einem durchschnittlichen Teilchendurchmesser von 0,1 bis 100 µm und einer Glasübergangstemperatur von ≧ 70 °C und die Polymerpulver aus
a) einem oder mehreren vernetzten Harnstoff-Aldehyd-Harzen, Triazin-Aldehyd-Harzen und Phenol-Aldehyd-Harzen, oder
b) einem oder mehreren unvernetzten Homo- oder Copolymeren von Acrylnitril und/oder Methacrylnitril mit einem Gewichtsmittel des Molekulargewichtes (Mw̅) von über 100000 und einem Gewichtsanteil von mindestens 70 % copolymerisiertem Acrylnitril und/oder Methacrylnitril, oder
c) Gemischen aus a) und b),
bestehen, die dem Überzugsmittel in mit dem Bindemittel, dem wasserdispergierbaren filmbildenden Harz oder Vernetzer und/oder mit einem Anreibeharz vermahlener Form zugesetzt wurden, wobei das Überzugsmittel und das Anreibeharz frei von Anteilen sind, die das Polymerpulver bei Temperaturen bis zu 80 °C anlösen oder quellen.

2. Wäßriges Überzugsmittel nach Anspruch 1, dadurch gekennzeichnet, daß die Polymerpulver im wesentlichen frei von ionischen oder ionisierbaren Gruppen sind.

3. Verfahren zur Herstellung eines Mehrschichtaufbaus auf einem elektrisch leitfähigen Substrat, dadurch gekennzeichnet, daß eine Grundierungsschicht aus einem wäßrigen überzugsmittel gemäß Anspruch 1 oder 2 elektrophoretisch abgeschieden wird, worauf eine oder mehrere Füller- und/oder Lackschichten appliziert werden.

4. Verfahren nach Anspruch 3, dadurch gekennzeichnet, daß die Grundierungsschicht vor dem Applizieren der weiteren Füller- und/oder Lackschichten eingebrannt wird.

5. Verwendung der wäßrigen überzugsmittel gemäß Anspruch 1 oder 2 zur kathodischen Elektrotauchlackierung.

6. Verwendung nach Anspruch 5 zur Herstellung von Grundierungen für Mehrschichtlackierungen.

## Claims

1. An aqueous coating agent for electrodeposition, containing a binder made of one or more water-soluble or water-dispersible film-forming resins and optionally one or more conventional cross-linkers for the film-forming resins; as well as dispersed polymer particles and optionally pigments, solvents and/or conventional lacquer-technological additives, characterized in that it contains as dispersed polymer particles 5 to 75 wt%, relative to the solids component, of film-forming resin and optionally present cross-linker on polymer powders, with an average particle diameter of 0.1 to 100 µm and a glass transition temperature of ≧70 °C and the polymer powders consist of
a) one or more cross-linked urea-aldehyde resins, triazine-aldehyde resins and phenol-aldehyde resins, or
b) one or more non cross-linked homo- or copolymers of acrylonitrile and/or methacrylonitrile with a weight-average molecular weight (M̅w) of more than 100,000 and with at least 70 wt% of copolymerized acrylonitrile and/or methacrylonitrile or
c) mixtures of a) and b),
which have been added to the coating agent in a form that has been ground with the binder, the water-dispersible film-forming resin or cross-linker and/or with a grinding resin, wherein the coating agent and the grinding resin are free from components that at temperatures up to 80 °C begin to dissolve the polymer powder or swell it.

2. An aqueous coating agent according to Claim 1, characterized in that the polymer powder is essentially free from ionic or ionizable groups.

3. A process for the production of a multicoat structure on an electrically conductive substrate, characterized in that a primer coat of an aqueous coating agent according to Claim 1 or 2 is electrophoretically deposited, whereupon one or more coats of filler and/or lacquer are applied.

4. A process according to Claim 3, characterized in that the primer coat is stoved before the application of the further filler and/or lacquer coats.

5. The use of the aqueous coating agent according to Claim 1 or 2 for cathodic electrodeposition.

6. The use according to Claim 5 for the production of primer coats for multicoat lacquer systems.

## Revendications

1. Composition aqueuse de revêtement pour électrodéposition contenant un liant constitué d'une ou plusieurs résine(s) filmogène(s) soluble(s) dans l'eau ou dispersible(s) dans l'eau et éventuellement d'un ou plusieurs agent(s) de réticulation usuel(s) pour les résines filmogènes, ainsi que des particules de polymères dispersées et éventuellement des pigments, des solvants et/ou des additifs usuels dans la technique des vernis, caractérisée en ce qu'elle contient, comme particules de polymères dispersées, 5 à 75% en poids, rapporté à la part de matière solide de la résine filmogène et de l'agent de réticulation éventuellement présent, de poudres de polymères ayant un diamètre moyen de particules allant de 0,1 à 100 um et une température de transition vitreuse égale ou supérieure à 70°C et les poudres de polymères étant constituées
a) d'une ou plusieurs résine(s) urée-aldéhyde, triazine-aldéhyde et phénol-aldéhyde réticulée(s) ou
b) d'un ou plusieurs homo- ou copolymère(s) non réticulé(s) d'acrylonitrile et/ou de méthacrylonitrile ayant un poids moléculaire moyen (Mw) supérieur à 100 000 et une proportion pondérale d'au moins 70% d'acrylonitrile et/ou de méthacrylonitrile copolymérisé ou
c) des mélanges de a) et de b),
lesdites poudres étant ajoutées à la composition de revêtement sous forme broyée avec le liant, la résine filmogène dispersible dans l'eau ou l'agent de réticulation et/ou une résine broyée, la composition de revêtement et la résine broyée ne contenant pas de constituants qui jusqu'à une température de 80°C provoqueraient une dissolution ou un gonflement des poudres de polymères.

2. Composition aqueuse selon la revendication 1, caractérisée en ce que les poudres de polymères ne comportent pas pour l'essentiel de groupes ioniques ou ionisables.

3. Procédé pour la réalisation d'un revêtement à couches multiples sur un substrat électriquement conducteur, caractérisé en ce que l'on dépose électrophorétiquement une couche de fond constituée d'une composition aqueuse de revêtement selon la revendication 1 ou 2, et en ce que l'on applique ensuite une ou plusieurs couche(s) de charge et/ou de vernis.

4. Procédé selon la revendication 3, caractérisé en ce que la couche de fond est soumise à une cuisson avant que soient appliquées les autres couches de charge et/ou de vernis.

5. Utilisation des compositions aqueuses de revêtement selon la revendication 1 ou 2 pour la réalisation de revêtements par électrodéposition cathodique.

6. Utilisation selon la revendication 5 pour la réalisation de couches de fond pour les revêtements à couches multiples.
